# EUROPÄISCHE PATENTSCHRIFT

(11) **EP 1 647 878 B1**
(45) Veröffentlichungstag und Bekanntmachung des Hinweises auf die Patenterteilung: **21.11.2007**
(21) Anmeldenummer: 04024697.7
(22) Anmeldetag: 15.10.2004
(51) Int. Cl.: G06F 3/033

(54) **Mousepad**
Mouse pad
Tapis de souris

(43) Veröffentlichungstag der Anmeldung: 19.04.2006
(73) Patentinhaber: Octogone GmbH, 79395 Neuenburg (DE)
(72) Erfinder: Bruns, Gerd, 79395 Neuenburg (DE)
(74) Vertreter: Zimmermann, Günter

(56) Entgegenhaltungen:
- WO-A-03/065193
- DE-A- 4 424 404
- DE-U- 29 602 425
- GB-A- 2 309 813
- A1 CUSTOM MOUSEPAD IMAGING INC.: "A1 "3D" Lenticular Mouse pads" INTERNET ARTICLE , [Online] 2003, Seiten 1-3, XP002313487 Gefunden im Internet: <URL:www.a1imaging.com/3Dpricing.html> [gefunden am 2005-01-14]

## Beschreibung

Die Erfindung bezieht sich auf ein Mousepad für eine Rollballmaus mit mindestens einer ersten Kunststofffolie mit einer Oberseite, wobei auf der Oberseite der ersten Kunststofffolie eine zweite Kunststofffolie angeordnet ist.

Ein derartiges Mousepad ist durch die DE 296 02 425 U bekannt. Das Mousepad verwendet als erste Kunststofffolie eine Hologrammschicht. Die zweite Kunststofffolie ist eine Gebrauchsschicht, welche derart aufgeraut ist oder gummiartig ist, damit genügend Rollreibung für die Rollmaus erzeugt wird. Die Gebrauchsschicht kann aus Sprühlack, einer Folie oder einem Heißlaminat bestehen. Die Hologrammschicht ist auf einer Trägerschicht aufgeklebt.

Durch die DE 44 24 404 A1 ist eine Unterlage für eine Computermaus bekannt, bei welcher die einzelnen Folien an ihren Rändern flüssigkeitsdicht verschweißt sind.

Ein weiteres Mousepad ist durch die DE 299 15 992 U bekannt. Das Mousepad dient als Unterlage für eine Computermaus, wobei mit der Kunststofffolie vom Betrachtungswinkel abhängige optische Effekte erzielt werden sollen. Dies wird bei dem bekannten Mousepad dadurch erreicht, dass die Kunststofffolie aus einzelnen Folienschichten aufgebaut ist, welche unterschiedlich farbige Pigmente enthalten. Bei der Herstellung der Kunststofffolie werden zuerst die einzelnen Folienschichten mit den unterschiedlichen Farbtönen hergestellt, anschließend werden die einzelnen Folienschichten übereinander angeordnet und unter Wärme miteinander verpresst. Bei der Arbeit mit der Computermaus weist dann diese Kunststofffolie je nach Betrachtungswinkel unterschiedliche Farbtöne auf. Nachteiligerweise ist das bekannte Mousepad recht aufwendig herzustellen.

Linsenrasterfolien für Mousepads oder andere Artikel sind bekannt. So ist durch die DE 203 12 177 U ein Werbeartikel bekannt, der auf der Außenfläche eine Linsenrasterfolie oder Lenticularfolie aufweist. Mittels einer derartigen Folie können Wechselbilder oder 3D-Bilder hergestellt werden. Linsenraster-Wechselbilder stellen bei der Betrachtung aus verschiedenen Richtungen unterschiedliche Bilder, beispielsweise Phasen eines Bewegungsablaufs dar. Ein Wechseln der Betrachtungsrichtung kann durch das Kippen eines Linsenraster-Wechselbildes oder auch durch das Vorübergehen an einem feststehenden Linsenraster-Wechselbild entstehen. Die Linsenraster können als Array von kuppelförmigen oder sphärischen Linsen oder als Array von zylinderlinsenförmigen Streifen erzeugt werden und in Kombination mit konzentrischen, streifenförmigen oder sonstigen graphischen Mustern eine Vielzahl optischer Effekte bei der Betrachtung aus verschiedenen Blickrichtungen erzeugen. Die Effekte werden dadurch erreicht, dass verschiedene Ausgangsbilder zunächst miteinander verschachtelt werden und dann die verschachtelten Bilder auf der Rückseite der Linsenrasterfolie gedruckt werden. Auf der Oberseite der Linsenrasterfolie sind die Linsen angeordnet, wobei die Folien nach der Anzahl der Linsen pro Inch (LPI) beschrieben werden. Übliche Folien haben 45 LPI für größere Bilder und 75 LPI für kleinere Bilder bis DIN A 4. Während durch den Bewegungsvorgang die Wechselbilder entstehen, zeigt ein 3D-Bild bereits in einer Blickrichtung eine dreidimensionale Tiefenwirkung.

Die Aufgabe der Erfindung wird somit darin gesehen, ein Mousepad der eingangs genannten Art derart weiterzuentwickeln, dass es in einfacher Weise hergestellt werden kann. Zusätzlich soll das Mousepad mit allen bekannten Computermäusen verwendet werden können.

Zur Lösung dieser Aufgabe wird erfindungsgemäß vorgeschlagen, dass ein Mousepad gemäß dem Oberbegriff des Anspruchs 1 entsprechend dem kennzeichnenden Teil dieses Anspruchs ausgebildet ist.

Da Linsenrasterfolien bekannt und im Handel erhältlich sind, erfordert die Verwendung der Linsenrasterfolie bei einem Mousepad keine aufwendigen Produktionsschritte. Anstelle der Linsenrasterfolie oder Lenticularfolie ist auch eine andere Folie denkbar, mit der ähnliche Wechselbilder oder 3D-Bilder erzeugt werden können. Allerdings kann die Linsenrasterfolie nur mit Computermäusen mit einer Rollkugel verwendet werden, da sich bei den sogenannten optischen Computermäusen, die mit Infrarot arbeiten, herausgestellt hat, dass die Struktur der Linsenrasterfolie offensichtlich die Lichtsignale derart ungünstig beeinflußt, dass diese optische Maussteuerung nicht verwendet werden kann. Es wurde nun überraschend festgestellt, dass durch Aufbringen oder Anordnen einer zweiten Kunststofffolie auf der Oberseite der Linsenrasterfolie dieser negative Effekt beseitigt wird, so dass das erfindungsgemäße Mousepad nun sowohl mit herkömmlichen Computermäusen mit Rollball als auch mit Infrarot-Computermäusen verwendet werden kann. Die zweite Kunststofffolie besteht aus klaren Kunststoffen und ist derart dünn, dass der optische Eindruck des 3D-Bildes und des Wechselbildes nicht oder nur minimal beeinträchtigt wird. Da bei der Herstellung des erfindungsgemäßen Mousepad die Anordnung der zweiten Kunststofffolie auf der Linsenrasterfolie kein aufwendiger Verfahrensschritt ist, kann insgesamt das erfindungsgemäße Mousepad in einfacher Weise hergestellt werden.

Um die zweite Kunststofffolie auf die Linsenrasterfolie aufzubringen, sind unterschiedliche Verfahren denkbar. Die Erfindung sieht vor, dass die Linsenrasterfolie an ihren Rändern mit der zweiten Kunststofffolie ebenfalls an ihren Rändern thermisch verschweißt ist. Durch Verschweißung wird die zweite Kunststofffolie derart über die Linsenrasterfolie gespannt, dass insgesamt eine kompakte Struktur für das Mousepad entsteht, so dass sich bei Benutzung der Computermaus auf der Oberseite der zweiten Kunststofffolie keine nachteiligen Wellenstrukturen oder dergleichen ausbilden können.

Damit bei Verwendung einer herkömmlichen Rollball-Computermaus der Rollball nicht auf der Oberseite der zweiten Kunststofffolie durchrutscht sondern mitläuft, weist die Oberseite der zweiten Kunststofffolie eine Prägung auf. Die Prägung kann regelmäßig oder unregelmäßig ausgebildet sein und wird meist bei der Herstellung der zweiten Kunststofffolie durch eine Prägung in der Umfangsfläche einer Walze zum Auswalzen der Folie festgelegt. Die zweite Kunststofffolie weist vorteilhafterweise eine glatte Unterseite auf, welche auf der Oberseite der Linsen der ersten Kunststofffolie aufliegt. Durch diese glatte Unterseite, welche keine Prägung aufweist, wird der optische Eindruck des Wechselbildes nicht vermindert.

Um eine gute Haftung des Mousepad auf der Oberfläche eines Tisches zu erreichen, sieht eine weitere Ausführungsform der Erfindung vor, dass ein Schaumstoffmaterial auf einer Unterseite der Linsenrasterfolie angeordnet ist. Das Schaumstoffmaterial ist ebenfalls mit den Rändern der Linsenrasterfolie verschweißt. Die zweite Kunststofffolie kann von unterschiedlicher Stärke sein. Vorteilhafterweise liegt die Stärke in einem Bereich von 50 µm bis 300µm. Auch die Linsenrasterfolie kann eine unterschiedliche Anzahl von Linsen pro Inch aufweisen. Zweckmäßigerweise wird eine Linsenrasterfolie mit 75 LPI verwendet.

Die Erfindung wird nachstehend anhand der Zeichnung näher erläutert. Die Zeichnung zeigt ein Ausführungsbeispiel der Erfindung. Hierbei stellt dar:

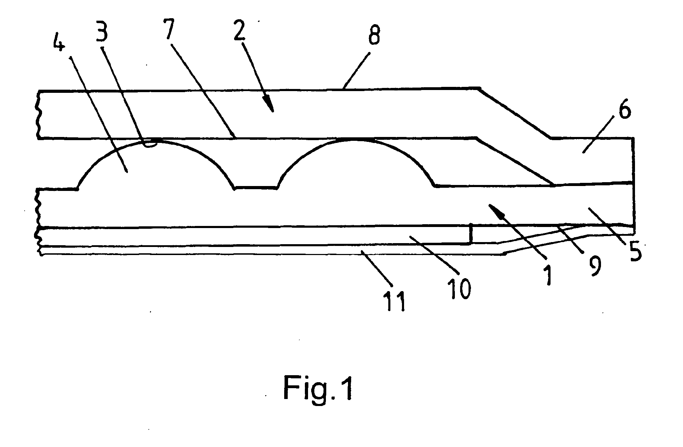

- Fig. 1:: einen abgebrochenen Querschnitt durch das erfindungsgemäße Mousepad.

Das Mousepad besitzt eine rechteckige Form von etwa 20 cm x 25 cm und weist eine erste Kunststoffolie 1 in Form einer Linsenrasterfolie und eine zweite Kunststoffolie 2 aus PVC auf. Die zweite Kunststoffolie 2 ist auf einer Oberseite 3 der einzelnen Linsen 4 der Linsenrasterfolie 1 angeordnet und zusammen mit der Linsenrasterfolie 1 thermisch verschweißt. Die Verschweißung erfolgt allerdings nur an den Rändern 5 sowohl der Linsenrasterfolie 1 als auch an den Rändern 6 der zweiten Kunststoffolie 2, so daß im sonstigen Bereich die zweite Kunststoffolie 2 auf den Oberseiten 3 der Linsen 4 der Linsenrasterfolie 1 aufliegt. Die zweite Kunststoffolie 2 besitzt eine glatte Unterseite 7 und eine matt ausgebildete Oberseite 8, welche mit einer Prägung versehen ist. Diese Prägung oder Struktur der Oberseite 8 bedingt diese Mattheit der zweiten Kunststoffolie 2. Die Linsenrasterfolie 1 weist 75 LPI auf und die Stärke der zweiten Kunststoffolie 2 beträgt 200 µm. Die Linsenrasterfolie 1 ist an ihrer Unterseite 9 mit Motiven 10 bedruckt und über diesen Motiven 10 ist noch eine in der Zeichnung nicht dargestellte weiße Deckfarbe gleichmäßig aufgedruckt. Zum Schutz der Motive 10 und zur Haftung des Mousepad auf der Oberfläche eines Tisches sind die Unterseite 9 und auch die Motive 10 mit einem Schaumstoffmaterial 11 oder einer Schaumstoffschicht überdeckt. Das Schaumstoffmaterial 11 ist im Außenbereich mit den Rändern 5 der Linsenrasterfolie 1 thermisch verschweißt. Bei Benutzung des Mousepad wird auf der Oberseite 8 der zweiten Kunststoffolie 2 eine Computermaus hin und her bewegt.

Schaut man in einer Blickrichtung von oben auf das erfindungsgemäße Mousepad, so zeigt sich bereits ein 3D-Bild mit einer dreidimensionalen Tiefenwirkung. Bei Betrachten aus verschiedenen Richtungen ergeben sich die Wechselbilder ebenfalls aufgrund der Linsenrasterfolie 1. Durch die Anordnung der zweiten Kunststoffolie 2 auf der Linsenrasterfolie 1 kann das erfindungsgemäße Mousepad sowohl mit einer herkömmlichen Computermaus mit einem Rollball als auch mit einer sogenannten optischen Computermaus oder Infrarot-Computermaus verwendet werden, da der ungünstige Einfluß der Linsenrasterfolie 1 auf die Lichtsignale der Computermaus durch die zweite Kunststoffolie 2 beseitigt wird.

## Patentansprüche

1. Mousepad für eine Rollballmaus mit mindestens einer ersten Kunststofffolie mit einer Oberseite, wobei auf der Oberseite (3) der ersten Kunststofffolie (1) eine zweite Kunststofffolie (2) angeordnet ist,
**dadurch gekennzeichnet,**
**dass** die erste Kunststofffolie (1) eine Linsenrasterfolie ist und die zweite Kunststofffolie auf der Oberseite (3) der einzelnen Linsen (4) der Linsenrasterfolie angeordnet ist und die Linsenrasterfolie (1) an ihren Rändern (5) mit der zweiten Kunststofffolie (2) ebenfalls an ihren Rändern (6) thermisch verschweißt ist, wobei die zweite Kunststofffolie (2) über die Linsenrasterfolie gespannt ist und auf den Oberseiten (3) der Linsen (4) aufliegt und deshalb für eine Benutzung mit einer optischen Maus geeignet ist.

2. Mousepad nach Anspruch 1,
**dadurch gekennzeichnet,**
**dass** die zweite Kunststofffolie (2) eine Oberseite (8) mit einer Prägung aufweist.

3. Mousepad nach einem der vorhergehenden Ansprüche,
**dadurch gekennzeichnet,**
**dass** die zweite Kunststofffolie (2) eine glatte Unterseite (7) aufweist, welche auf der Oberseite (3) der Linsen (4) der ersten Kunststofffolie (1) aufliegt.

4. Mousepad nach einem der vorhergehenden Ansprüche,
**dadurch gekennzeichnet,**
**dass** ein Schaumstoffmaterial (11) auf einer Unterseite (9) der ersten Kunststofffolie (1) angeordnet ist.

5. Mousepad nach einem der vorhergehenden Ansprüche,
**dadurch gekennzeichnet,**
**dass** die zweite Kunststofffolie (2) eine Stärke in einem Bereich von 50 µm bis 300 µm hat.

## Claims

1. Mouse pad for a rolling ball mouse with at least a first plastics material film with an upper side, wherein a second plastics material film (2) is arranged on the upper side (3) of the first plastics material film (1), **characterised in that** the first plastics material film (1) is a lens grid film and the second plastics material film is arranged on the upper side (3) of the individual lenses (4) of the lens grid film and the lens grid film (1) is thermally welded at its edges (5) to the second plastics material film (2) also at its edges (6), the second plastics material film (2) being stretched over the lens grid film and resting on the upper sides (3) of the lenses (4) and therefore being suitable for use with an optical mouse.

2. Mouse pad according to claim 1, **characterised in that** the second plastics material film (2) has an upper side (8) with an embossing.

3. Mouse pad according to any one of the preceding claims, **characterised in that** the second plastics material film (2) has a smooth lower side (7), which rests on the upper side (3) of the lenses (4) of the first plastics material film (1).

4. Mouse pad according to any one of the preceding claims, **characterised in that** a foam material (11) is arranged on the lower side (9) of the first plastics material film (1).

5. Mouse pad according to any one of the preceding claims, **characterised in that** the second plastics material film (2) has a thickness in a range of 50 µm to 300 µm.

## Revendications

1. Tapis de souris pour une souris mécanique à boule avec au moins un premier film de matière plastique avec une face supérieure, sur la face supérieure (3) du premier film de matière plastique (1) étant disposé un second film de matière plastique (2),
**caractérisé en ce que**
le premier film de matière plastique (1) est un film à réseau lentille et le second film de matière plastique est disposé sur la face supérieure (3) des différentes lentilles (4) du film à réseau lentille et le film à réseau lentille (1) est soudé de manière thermique à ses bords (5) avec le second film de matière plastique (2) également à ses bords (6), le second film de matière plastique (2) étant tendu au-dessus du film à réseau lentille et reposant sur les faces supérieures (3) des lentilles (4) et étant ainsi approprié à une utilisation avec une souris optique.

2. Tapis de souris selon la revendication 1,
**caractérisé en ce que**
le second film de matière plastique (2) présente une face supérieure (8) avec une gravure.

3. Tapis de souris selon l'une des revendications précédentes,
**caractérisé en ce que**
le second film de matière plastique (2) présente une face inférieure lisse (7), laquelle repose sur la face supérieure (3) des lentilles (4) du premier film de matière plastique (1).

4. Tapis de souris selon l'une des revendications précédentes,
**caractérisé en ce que**
un matériau en mousse (11) est disposé sur une face inférieure (9) du premier film de matière plastique (1).

5. Tapis de souris selon l'une des revendications précédentes,
**caractérisé en ce que**
le second film de matière plastique (2) a une épaisseur d'un ordre de 50 µm à 300 µm.
